# EUROPÄISCHE PATENTSCHRIFT

(11) **EP 3 274 196 B1**
(45) Veröffentlichungstag und Bekanntmachung des Hinweises auf die Patenterteilung: **13.03.2019**
(21) Anmeldenummer: 16705723.1
(22) Anmeldetag: 26.01.2016
(51) Int. Cl.: B60G 15/06, B60G 17/02, B60G 11/52, F16F 9/54

(54) **FEDERBEINSTÜTZLAGERANORDNUNG FÜR EIN KRAFTFAHRZEUG**
SUSPENSION STRUT BEARING ASSEMBLY FOR A MOTOR VEHICLE
DISPOSITIF DE PALIER SUPPORT DE JAMBE DE FORCE POUR UN VÉHICULE AUTOMOBILE

(30) Priorität: 23.03.2015 DE 102015007323; 15.07.2015 DE 102015213264
(43) Veröffentlichungstag der Anmeldung: 31.01.2018
(73) Patentinhaber: Schaeffler Technologies AG & Co. KG, 91074 Herzogenaurach (DE)
(72) Erfinder: BÄUML, Markus, 91058 Erlangen (DE); FABER, Daniel, 90559 Burgthann (DE); KREHMER, Hartmut, 91052 Erlangen (DE); WÜBBOLT-GORBATENKO, Benjamin, 91054 Erlangen (DE); KRAUS, Markus, 90574 Roßtal (DE); BAUER, Jürgen, 91336 Heroldsbach (DE)
(86) Internationale Anmeldenummer: PCT/DE2016/200037
(87) Internationale Veröffentlichungsnummer: WO 2016/150437

(56) Entgegenhaltungen:
- EP-A1- 1 310 387
- EP-A2- 2 236 324
- DE-A1- 10 054 488
- DE-A1- 10 237 809
- DE-A1-102006 001 708
- DE-A1-102007 026 471
- DE-U1- 29 923 896
- JP-A- S6 490 807
- JP-A- 2001 121 936
- JP-A- 2004 017 769
- US-A- 4 458 605
- US-A1- 2008 303 235

## Beschreibung

Die Erfindung betrifft eine Federbeinstützlageranordnung für ein Kraftfahrzeug, umfassend ein verstellbares Domlager mit einem Elastomerelement, wobei das verstellbare Domlager zum einen vorzugsweise axial über ein Federbeinstützlager an einer Fahrwerksfeder eines Federbeins angeordnet ist, und zum anderen zumindest mittelbar an einer Karosserie des Kraftfahrzeugs zur Anlage kommt, um zumindest das Federbein dämpfend mit der Karosserie zu verbinden.

### Gebiet der Erfindung

Das Einsatzgebiet der Erfindung erstreckt sich vornehmlich auf die Kraftfahrzeugtechnik. Zur Federung des Kraftfahrzeugs werden an der Vorderachse und teilweise an der Hinterachse des Fahrzeugs Federbeine angeordnet. Ein Federbein besteht im Wesentlichen aus einer die Federung übernehmende Fahrwerksfeder sowie Zusatzteilen zur Befestigung und Lagerung der Fahrwerksfeder an der Karosserie. Das Federbein wird mit dem oberen Ende an der Karosserie des Fahrzeugs befestigt und überträgt hierdurch die Bewegungen des Fahrwerks gedämpft auf die Fahrzeugkarosserie. Das zur Karosserie gerichtete Ende der Fahrwerksfeder wird üblicherweise durch einen Federteller und vorzugsweise mit einem Federbeinlager abgeschlossen, über welche wiederum ein Domlager eingreifen kann.

Serienmäßige Domlager sind üblicherweise auf Fahrkomfort ausgelegt. Sie bestehen meist aus einem inneren und einem äußeren Metallteil, welche über ein Elastomer miteinander verbunden sind. Diese Bauweise ermöglicht ein komfortables Fahrverhalten, da das Domlager mitfedert und Stöße aufnimmt. Allerdings ist diese beschriebene Verbindung auf eine komfortable oder auf eine dynamische Fahrweise auszulegen, wobei eine komfortable Auslegung für eine dynamische Fahrweise unvorteilhaft ist und umgekehrt.

Beispielsweise geht ein zuvor beschriebenes Domlager aus der DE 299 23 896 U1 hervor. Nachteilig an dem zuvor genannten Stand der Technik ist, dass eine bei der Herstellung eingestellte Steifigkeit während des Betriebs des Kraftfahrzeugs nicht einstellbar ist. Somit ist die Steifigkeit des Domlagers nicht mehr verstellbar.

### Aufgabenstellung

Die Aufgabe der Erfindung besteht darin, eine Federbeinstützlageranordnung für ein Kraftfahrzeug weiterzuentwickeln und dadurch insbesondere den Komfort für die Fahrzeuginsassen sowie die Fahrdynamik des Kraftfahrzeugs zu erhöhen.

### Erfindungsgemäße Lösung

Erfindungsgemäß weist das verstellbare Domlager einen radial um das Elastomerelement angeordneten Elastomerring auf, der axial zwischen dem Federbein und der Karosserie angeordnet ist und zur Steifigkeitserhöhung des verstellbaren Domlagers zumindest mittelbar zwischen dem Federbein und der Karosserie zur Anlage kommt. Mit anderen Worten kann der Elastomerring zusätzlich zum Elastomerelement zumindest mittelbar zwischen dem Federbein und der Karosserie in Eingriff gebracht werden, um die Steifigkeit des verstellbaren Domlagers zu erhöhen. Vorzugsweise weist der Elastomerring eine höhere Steifigkeit auf als das Elastomerelement. Ferner ist es aber auch denkbar, dass die Steifigkeit des Elastomerrings gleich oder geringer als die Steifigkeit des Elastomerelements ist. Dadurch lässt sich die Steifigkeit des verstellbaren Domlagers variabel zwischen einer geringen und einer hohen Steifigkeit einstellen und somit die Fahreigenschaften des Kraftfahrzeugs an der jeweiligen Fahrsituation anpassen. Dabei unterstützt eine hohe Steifigkeit des verstellbaren Domlagers eine sportliche Fahrweise und eine geringe Steifigkeit des verstellbaren Domlagers eine komfortable Fahrweise.

Vorzugsweise weist das verstellbare Domlager einen Stellring auf, der den Elastomerring zumindest axial aufnimmt, um den Elastomerring zur Steifigkeitserhöhung des Domlagers durch eine Drehung des Stellrings zumindest mittelbar zwischen dem Federbein und der Karosserie in Eingriff zu bringen. Besonders bevorzugt nimmt der Stellring den Elastomerring auch radial auf, um eine Kompression des Elastomerrings bei axialer Belastung zu ermöglichen und ein radiales Fließen des Elastomerrings zu verhindern.

Vorteilhafterweise ist der Stellring in einem Gehäuse des verstellbaren Domlagers angeordnet und weist eine stirnseitig über den Umfang ausgebildete Rampenkontur auf, die mit einer korrespondierend dazu ausgebildeten Rampenkontur am Gehäuse zusammenwirkt, um bei einer Drehung des Stellrings eine axiale Verschiebung des Stellrings im Gehäuse zu realisieren. Ferner ist es auch denkbar die jeweilige Rampenkontur an einem anderen Bauteil auszubilden. Mithin kommen die beiden Rampenkonturen axial aneinander zur Anlage und ermöglichen bei der Drehung des Stellrings eine axiale Verschiebung des Stellrings im Gehäuse. Dabei gleiten die beiden Rampenkonturen aneinander ab bis eine axiale Endposition erreicht ist. Die axiale Endposition ist durch das Auslaufen der beiden Rampenkonturen in zwei horizontale Ringflächen definiert.

Ferner bevorzugt ist ein Aktuator, umfassend einen Elektromotor und ein Getriebe, zur Verdrehung des Stellrings zumindest teilweise im oder am Gehäuse angeordnet. Insbesondere ist das Getriebe des Aktuators im Gehäuse angeordnet, wobei der Elektromotor von außen an dem Gehäuse angebracht ist. Ferner kann der Elektromotor auch dezentral angeordnet sein und über eine sogenannte Flexwelle angebunden werden. Vorzugsweise ist das Gehäuse mit einer Kolbenstange des Federbeins verbunden.

Des Weiteren bevorzugt ist das Getriebe entweder als Stirnradgetriebe oder Schneckengetriebe ausgebildet. Vorzugsweise ist das Stirnradgetriebe zweistufig ausgebildet. Ferner sind aber auch andere Getriebe, insbesondere ein Planetengetriebe oder ein Riementrieb, denkbar.

Ferner bevorzugt weist das Gehäuse ein Anbindungselement auf, worüber das verstellbare Domlager axial mit der Karosserie verbunden ist. Das Anbindungselement ist somit teil des Gehäuses und dient insbesondere zur Verbindung des Domlagers mit der Karosserie. Vorzugsweise ist das Domlager über mehrere Schraubelemente, die die Karosserie und das Anbindungselement axial durchdringen, an der Karosserie befestigt. Des Weiteren sind auch andere Befestigungselemente, wie beispielsweise Stehbolzen denkbar.

Die Erfindung schließt die technische Lehre ein, dass der Aktuator über ein damit zusammenwirkendes Steuerelement steuerbar und regelbar ist. Das Steuerelement ist dabei entweder fahrsituationsabhängig und somit automatisch oder fahrerwunschabhängig und somit manuell steuerbar und regelbar. Bei der fahrsituationsabhängigen Steuerung werden je nach Fahrsituation Signale an das Steuerelement übermittelt und dementsprechend die Steifigkeit des Domlagers eingestellt. Bei der fahrerwunschabhängigen Steuerung kann der Fahrer des Kraftfahrzeugs über einen jeweiligen Schalter zwischen unterschiedlichen Steifigkeitsstufen des Domlagers variieren und dadurch die jeweilige Fahrweise des Kraftfahrzeugs, z. B. sportlich oder komfortabel, unterstützen.

Vorzugsweise ist zumindest axial zwischen dem Stellring und dem Elastomerring ein Lagerelement angeordnet. Das Lagerelement ist insbesondere dazu vorgesehen bei einem Anpressen des Elastomerrings am Anbindungselement ein Reibmoment zwischen dem Stellring und dem Elastomerring zu minimieren.

### Kurzbeschreibung der Zeichnung

Weitere die Erfindung verbessernde Maßnahmen werden nachstehend gemeinsam mit der Beschreibung eines Ausführungsbeispiels der Erfindung anhand der Figuren näher dargestellt. Es zeigen
- Figur 1: eine vereinfachte schematische Darstellung einer erfindungsgemäßen Federbeinstützlageranordnung, umfassend ein erfindungsgemäßes Domlager,
- Figur 2: eine schematische Schnittdarstellung des erfindungsgemäßen Domlagers, wobei das Domlager in der abgebildeten Position eine geringe Steifigkeit aufweist,

- Figur 3a: eine schematische Detailschnittdarstellung des erfindungsgemäßen Domlagers gemäß Figur 2, wobei das Domlager in der abgebildeten Position eine geringe Steifigkeit aufweist,
- Figur 3b: eine schematische Detailschnittdarstellung des erfindungsgemäßen Domlagers gemäß Figur 2, wobei das Domlager in der abgebildeten Position eine hohe Steifigkeit aufweist,
- Figur 4a: eine schematische Detaildarstellung eines erfindungsgemäßen Aktuators gemäß Figur 2, und
- Figur 4b: eine schematische Detaildarstellung eines erfindungsgemäßen Aktuators gemäß einem weiteren Ausführungsbeispiel.

### Ausführliche Beschreibung der Zeichnung

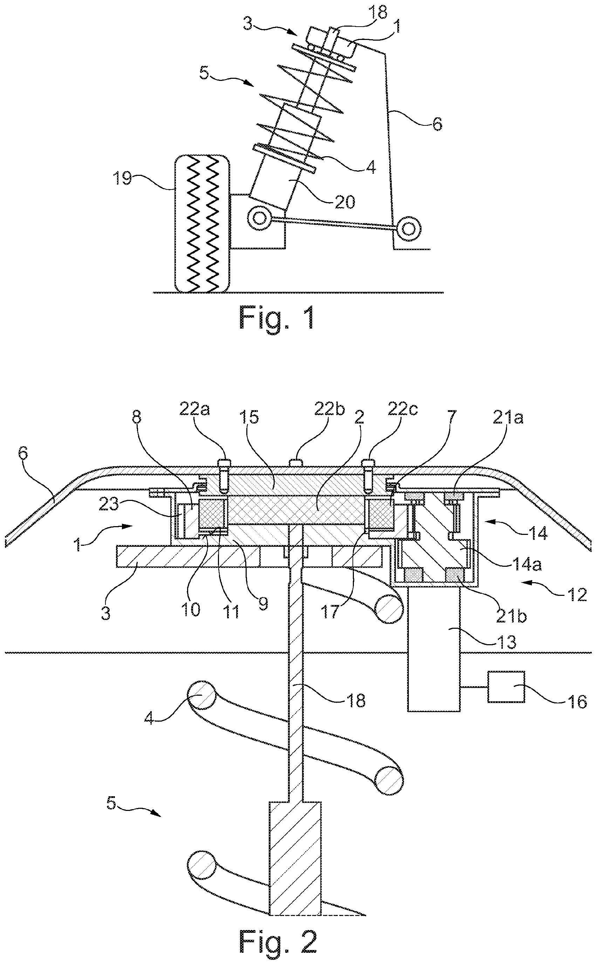

Gemäß Figur 1 ist im Bereich einer Radaufhängung eines - hier nicht dargestellten - Kraftfahrzeuges zwischen einem Rad 19 und einer Karosserie 6 ein Federbein 5 angeordnet. Das Federbein 5 weist einen Dämpfer 20 mit einer Kolbenstange 18 sowie einer Fahrwerksfeder 4 auf. Seitens der Karosserie 6 stützt sich das Federbein 5 über ein Federbeinstützlager 3 an einem verstellbaren Domlager 1 dämpfend ab.

Nach Figur 2 weist das verstellbare Domlager 1 ein Gehäuse 9 auf, in dem ein Elastomerelement 2, ein radial um das Elastomerelement 2 angeordneter Elastomerring 7 und ein Stellring 8 angeordnet sind. Ferner weist das Gehäuse 9 ein Anbindungselement 15 auf, worüber das verstellbare Domlager 1 axial mit der Karosserie 6 verbunden ist, wobei mehrere Schraubelemente 22a, 22b, 22c, von denen lediglich drei Schraubelemente 22a, 22b, 22c dargestellt sind, die Verbindung zwischen der Karosserie 6 und dem Anbindungselement 15 realisieren. Des Weiteren ist das Gehäuse 9 auch mit der Kolbenstange 18 des Federbeins 5 verbunden. Die Fahrwerksfeder 4 kommt axial am Federbeinstützlager 3 zur Anlage.

Der Stellring 8 nimmt den Elastomerring 7 an einer dem Elastomerring 7 zugewandten Ringfläche axial auf und weist an einer zu dieser entgegengesetzten Ringfläche eine stirnseitig über den Umfang ausgebildete Rampenkontur 10 auf, die mit einer korrespondierend dazu ausgebildeten Rampenkontur 11 am Gehäuse 9 zusammenwirkt, um bei einer Drehung des Stellrings 8 eine axiale Verschiebung des Stellrings 8 im Gehäuse 9 zu realisieren. Mithin gleiten die beiden Rampenkonturen 10, 11 aneinander ab und verschieben aufgrund der Rampengeometrie den Stellring 8 axial im Gehäuse 9. Die Drehung des Stellrings 8 erfolgt durch einen Aktuator 12, der teilweise ebenfalls im Gehäuse 9 untergebracht ist. Der Aktuator 12 weist einen Elektromotor 13 sowie ein Getriebe 14 auf und ist über ein damit zusammenwirkendes Steuerelement 16 steuerbar. Das Steuerelement 16 ist dabei entweder fahrsituationsabhängig und somit automatisch oder fahrerwunschabhängig und somit manuell steuerbar und regelbar. Das Getriebe 14, das als zweistufiges Stirnradgetriebe 14a ausgebildet ist, wirkt über eine Verzahnung 23 an der Außenumfangsfläche des Stellringes 8 mit dem Stellring 8 zusammen. Das zum Drehen des Stellringes 8 benötigte Drehmoment wird von dem am Gehäuse 9 angeordneten Elektromotor 13 erzeugt. Zur Reibungsminimierung ist axial zwischen dem Stellring 8 und dem Elastomerring 7 ein Lagerelement 17 angeordnet. Ferner weist auch das zweistufige Stirnradgetriebe 14a zwei Lagerelemente 21a, 21b zur Reibungsminimierung auf.

Der Elastomerring 7 weist eine höhere Steifigkeit auf als das Elastomerelement 2. Durch die Drehung des Stellrings 8 wird der Elastomerring 7 zur Steifigkeitserhöhung des Domlagers 1 mittelbar zwischen dem Federbein 5 und der Karosserie 6 in Eingriff gebracht. Im Wesentlichen wird der Elastomerring 7 axial zwischen dem Anbindungselement 15 und dem Stellring 8 in Eingriff gebracht. Dadurch wird nicht nur die Auflagefläche des Domlagers 1 vergrößert, sondern auch die Steifigkeit des Domlagers 1 erhöht, wodurch ein dynamisches Fahren unterstützt wird. Die Drehung des Stellrings 8 in entgegengesetzter Richtung entkoppelt den Elastomerring 7 vom Anbindungselement 15, sodass lediglich das Elastomerelement 2 am Anbindungselement 15 zur Anlage kommt. Durch die Verringerung der Steifigkeit des variablen Domlagers 1 wird ein komfortables Fahren unterstützt.

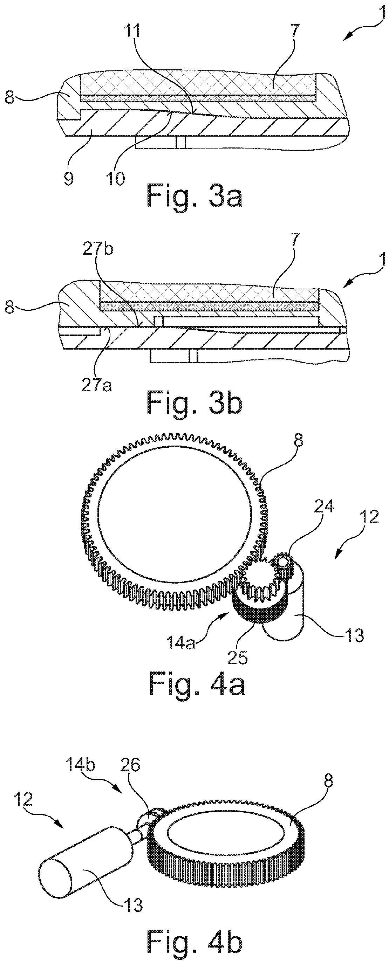

Gemäß Figur 3a befindet sich der Stellring 8 in einer maximal eingefahrenen Position. Mit anderen Worten weist das - hier nur teilweise dargestellte - verstellbare Domlager 1 aufgrund einer axialen Beabstandung zwischen dem Elastomerring 7 und dem - hier nicht dargestellten - Anbindungselement 15 eine minimale Steifigkeit auf, da lediglich das - hier nicht dargestellte -Elastomerelement 2 am Anbindungselement 15 zur Anlage kommt. Die Rampenkontur 10 am Stellring 8 ist komplementär an der Rampenkontur 11 am Gehäuse 9 ausgebildet.

Nach Figur 3b befindet sich der Stellring 8 in einer maximal ausgefahrenen Position, wobei zwei horizontal ausgebildete Ringflächen 27a, 27b axial aneinander liegen und dadurch eine stabile Position des Stellrings 8 realisieren. Mit anderen Worten weist das - hier nur teilweise dargestellte - verstellbare Domlager 1 aufgrund der axialen Anlage des Elastomerrings 7 am - hier nicht dargestellten - Anbindungselement 15 eine maximale Steifigkeit auf. Mithin kommt sowohl das - hier nicht dargestellte - Elastomerelement 2 als auch der Elastomerring 7axial am Anbindungselement 15 zur Anlage. Die Rampenkontur 10 am Stellring 8 liegt komplementär an der Rampenkontur 11 am Gehäuse 9 an.

Figur 4a zeigt den Aktuator 12, umfassend den Elektromotor 13 und das Getriebe 14. Das Getriebe 14 ist als zweistufiges Stirnradgetriebe 14a ausgebildet. Der Elektromotor 13 weist eine Sonnenwelle 24 auf, die mit einem gestuften Zahnrad 25 kämmt, das wiederum mit dem Stellring 8 kämmt. Die Sonnenwelle 24 ist im Wesentlichen eine Motorwelle mit daran angeordnetem Zahnrad.

Figur 4b zeigt den Aktuator 12, umfassend den Elektromotor 13 und das Getriebe 14. Das Getriebe 14 ist als Schneckengetriebe 14b ausgebildet. Der Elektromotor 13 weist eine mit dem Stellring 8 kämmende Schneckenwelle 26 auf.

### Bezugszeichenliste

- 1: verstellbares Domlager
- 2: Elastomerelement
- 3: Federbeinstützlager
- 4: Fahrwerksfeder
- 5: Federbein
- 6: Karosserie
- 7: Elastomerring
- 8: Stellring
- 9: Gehäuse
- 10: Rampenkontur
- 11: Rampenkontur
- 12: Aktuator
- 13: Elektromotor
- 14: Getriebe
- 14a: Stirnradgetriebe
- 14b: Schneckengetriebe
- 15: Anbindungselement
- 16: Steuerelement
- 17: Lagerelement
- 18: Kolbenstange
- 19: Rad
- 20: Dämpfer
- 21a, 21b: Lagerelemente
- 22a-22c: Schraubelemente
- 23: Verzahnung
- 24: Sonnenwelle
- 25: Zahnrad
- 26: Schneckenwelle
- 27a, 27b: Ringfläche

## Patentansprüche

1. Federbeinstützlageranordnung für ein Kraftfahrzeug, umfassend ein verstellbares Domlager (1) mit einem Elastomerelement (2), wobei das verstellbare Domlager (1) zum einen vorzugsweise axial über ein Federbeinstützlager (3) an einer Fahrwerksfeder (4) eines Federbeins (5) angeordnet ist, und zum anderen zumindest mittelbar an einer Karosserie (6) des Kraftfahrzeugs zur Anlage kommt, um zumindest das Federbein (5) dämpfend mit der Karosserie (6) zu verbinden,
**dadurch gekennzeichnet, dass** das verstellbare Domlager (1) einen radial um das Elastomerelement (2) angeordneten Elastomerring (7) aufweist, der axial zwischen dem Federbein (5) und der Karosserie (6) angeordnet ist und zur Steifigkeitserhöhung des verstellbaren Domlagers (1) zumindest mittelbar zwischen dem Federbein (5) und der Karosserie (6) zur Anlage kommt.

2. Federbeinstützlageranordnung nach Anspruch 1,
**dadurch gekennzeichnet, dass** das verstellbare Domlager (1) einen Stellring (8) aufweist, der den Elastomerring (7) zumindest axial aufnimmt, um den Elastomerring (7) zur Steifigkeitserhöhung des Domlagers (1) durch eine Drehung des Stellrings (8) zumindest mittelbar zwischen dem Federbein (5) und der Karosserie (6) in Eingriff zu bringen.

3. Federbeinstützlageranordnung nach Anspruch 2,
**dadurch gekennzeichnet, dass** der Stellring (8) in einem Gehäuse (9) des verstellbaren Domlagers (1) angeordnet ist und eine stirnseitig über den Umfang ausgebildete Rampenkontur (10) aufweist, die mit einer korrespondierend dazu ausgebildeten Rampenkontur (11) am Gehäuse (9) zusammenwirkt, um bei einer Drehung des Stellrings (8) eine axiale Verschiebung des Stellrings (8) im Gehäuse (9) zu realisieren.

4. Federbeinstützlageranordnung nach Anspruch 3,
**dadurch gekennzeichnet, dass** ein Aktuator (12), umfassend einen Elektromotor (13) und ein Getriebe (14), zur Verdrehung des Stellrings (8) zumindest teilweise im oder am Gehäuse (9) angeordnet ist.

5. Federbeinstützlageranordnung nach Anspruch 4,
**dadurch gekennzeichnet, dass** das Getriebe (14) entweder als Stirnradgetriebe (14a) oder Schneckengetriebe (14b) ausgebildet ist.

6. Federbeinstützlageranordnung nach Anspruch 3,
**dadurch gekennzeichnet, dass** das Gehäuse (9) ein Anbindungselement (15) aufweist, worüber das verstellbare Domlager (1) axial mit der Karosserie (6) verbunden ist.

7. Federbeinstützlageranordnung nach Anspruch 4,
**dadurch gekennzeichnet, dass** der Aktuator (12) über ein damit zusammenwirkendes Steuerelement (16) steuerbar und regelbar ist.

8. Federbeinstützlageranordnung nach Anspruch 2,
**dadurch gekennzeichnet, dass** zumindest axial zwischen dem Stellring (8) und dem Elastomerring (7) ein Lagerelement (17) angeordnet ist.

9. Federbeinstützlageranordnung nach Anspruch 3,
**dadurch gekennzeichnet, dass** das Gehäuse (9) mit einer Kolbenstange (18) des Federbeins (5) verbunden ist.

## Claims

1. Suspension strut mount arrangement for a motor vehicle, comprising an adjustable strut bearing (1) with an elastomer element (2), the adjustable strut bearing (1) firstly being arranged preferably axially via a suspension strut mount (3) on a chassis spring (4) of a suspension strut (5), and secondly coming into contact at least indirectly with a vehicle body (6) of the motor vehicle, in order to connect at least the suspension strut (5) to the vehicle body (6) in a damping manner, **characterized in that** the adjustable strut bearing (1) has an elastomer ring (7) which is arranged radially around the elastomer element (2), is arranged axially between the suspension strut (5) and the vehicle body (6), and comes at least indirectly into contact between the suspension strut (5) and the vehicle body (6) in order to increase the rigidity of the adjustable strut bearing (1).

2. Suspension strut mount arrangement according to Claim 1, **characterized in that** the adjustable strut bearing (1) has an adjusting ring (8) which receives the elastomer ring (7) at least axially, in order to bring the elastomer ring (7) at least indirectly into engagement between the suspension strut (5) and the vehicle body (6) in order to increase the rigidity of the strut bearing (1) by way of a rotation of the adjusting ring (8).

3. Suspension strut mount arrangement according to Claim 2, **characterized in that** the adjusting ring (8) is arranged in a housing (9) of the adjustable strut bearing (1) and has a ramp contour (10) which is configured on the end side over the circumference and interacts with a ramp contour (11) which is configured in a corresponding manner with respect to it on the housing (9), in order to realize an axial displacement of the adjusting ring (8) in the housing (9) in the case of a rotation of the adjusting ring (8).

4. Suspension strut mount arrangement according to Claim 3, **characterized in that** an actuator (12), comprising an electric motor (13) and a gear mechanism (14), for rotating the adjusting ring (8) is arranged at least partially in or on the housing (9).

5. Suspension strut mount arrangement according to Claim 4, **characterized in that** the gear mechanism (14) is configured either as a spur gear mechanism (14a) or as a worm gear mechanism (14b).

6. Suspension strut mount arrangement according to Claim 3, **characterized in that** the housing (9) has an attachment element (15), via which the adjustable strut bearing (1) is connected axially to the vehicle body (6).

7. Suspension strut mount arrangement according to Claim 4, **characterized in that** the actuator (12) can be controlled and regulated via a control element (16) which interacts with it.

8. Suspension strut mount arrangement according to Claim 2, **characterized in that** a bearing element (17) is arranged at least axially between the adjusting ring (8) and the elastomer ring (7).

9. Suspension strut mount arrangement according to Claim 3, **characterized in that** the housing (9) is connected to a piston rod (18) of the suspension strut (5) .

## Revendications

1. Dispositif de palier de support de jambe de force pour un véhicule automobile, comprenant une coupelle d'amortisseur réglable (1) avec un élément élastomère (2), dans lequel la coupelle d'amortisseur réglable (1) est d'une part disposée de préférence axialement par un palier de support de jambe de force (3) sur un ressort de châssis (4) d'une jambe de force (5), et d'autre part vient s'appliquer au moins indirectement sur une carrosserie (6) du véhicule automobile, afin de relier au moins la jambe de force (5) de façon amortie à la carrosserie (6),
**caractérisé en ce que** la coupelle d'amortisseur réglable (1) présente un anneau élastomère (7) disposé radialement autour de l'élément élastomère (2), qui est disposé axialement entre la jambe de force (5) et la carrosserie (6) et qui vient s'appliquer au moins indirectement entre la jambe de force (5) et la carrosserie (6) afin d'augmenter la rigidité de la coupelle d'amortisseur réglable (1).

2. Dispositif de palier de support de jambe de force selon la revendication 1, **caractérisé en ce que** la coupelle d'amortisseur réglable (1) présente une bague de réglage (8), qui contient au moins axialement l'anneau élastomère (7), afin d'amener l'anneau élastomère (7) en engagement au moins indirectement entre la jambe de force (5) et la carrosserie (6) par une rotation de la bague de réglage (8) afin d'augmenter la rigidité de la coupelle d'amortisseur (1).

3. Dispositif de palier de support de jambe de force selon la revendication 2, **caractérisé en ce que** la bague de réglage (8) est disposée dans un boîtier (9) de la coupelle d'amortisseur réglable (1) et présente un contour de rampe (10) formé frontalement sur la périphérie, qui coopère avec un contour de rampe (11) formé en correspondance sur le boîtier (9), afin de réaliser lors d'une rotation de la bague de réglage (8) un déplacement axial de la bague de réglage (8) dans le boîtier (9).

4. Dispositif de palier de support de jambe de force selon la revendication 3, **caractérisé en ce qu'**un actionneur (12), comprenant un moteur électrique (13) et une transmission (14), est disposé au moins en partie dans ou sur le boîtier (9) pour faire tourner la bague de réglage (8).

5. Dispositif de palier de support de jambe de force selon la revendication 4, **caractérisé en ce que** la transmission (14) est formée soit par un engrenage droit (14a) soit par une roue à vis sans fin (14b).

6. Dispositif de palier de support de jambe de force selon la revendication 3, **caractérisé en ce que** le boîtier (9) présente un élément de liaison (15), par lequel la coupelle d'amortisseur réglable (1) est reliée axialement à la carrosserie (6).

7. Dispositif de palier de support de jambe de force selon la revendication 4, **caractérisé en ce que** l'actionneur (12) peut être commandé et régulé par un élément de commande (16) qui coopère avec lui.

8. Dispositif de palier de support de jambe de force selon la revendication 2, **caractérisé en ce qu'**un élément de palier (17) est disposé au moins axialement entre la bague de réglage (8) et l'anneau élastomère (7).

9. Dispositif de palier de support de jambe de force selon la revendication 3, **caractérisé en ce que** le boîtier (9) est relié à une tige de piston (18) de la jambe de force (5).
